(19) **Europäisches Patentamt European Patent Office Office européen des brevets**

(11) **EP 4 183 545 B1**

(12) **EUROPEAN PATENT SPECIFICATION**

(45) Date of publication and mention of the grant of the patent:
**29.07.2026 Bulletin 2026/31**

(21) Application number: **21306602.0**

(22) Date of filing: **18.11.2021**

(51) International Patent Classification (IPC):
**B29C 45/00** (2006.01)

(52) Cooperative Patent Classification (CPC):
**B29C 45/0017; B29C 45/0046; B29C 45/0053;**
B29C 2045/0058; B29C 2793/0027;
B29C 2793/009; B29L 2031/3005

(54) **METHOD FOR PRODUCING A PLASTIC BODY PART**

VERFAHREN ZUR HERSTELLUNG EINES KUNSTSTOFFKAROSSERIETEILS

PROCÉDÉ DE FABRICATION D'UNE PIÈCE DE CARROSSERIE EN MATIÈRE PLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.05.2023 Bulletin 2023/21**

(73) Proprietor: **OPmobility SE**
**69007 Lyon (FR)**

(72) Inventors:
• **GÖRSE, Hergen**
**Sainte-Julie (FR)**
• **WEGENER, Wieland**
**Sainte-Julie (FR)**

(74) Representative: **LLR**
**2, rue Jean Lantier**
**75001 Paris (FR)**

(56) References cited:
**WO-A1-2011/032064    WO-A1-2016/075411**

**Description**

The invention relates to vehicle body part. More precisely, the invention is related to vehicle body parts intended to integrate at least one movable flap covering an opening and the method for producing such body parts. By "flap" is meant any type of element that can perform a function of covering an opening of the body part, for example, a movable cover, flap, shutter.

It is known to produce vehicle body part as an assembly of a molded plastic panel inside which an opening is designed, and a molded plastic flap designed to cover the opening. WO 2016/075411 A1 discloses molding a shell-shaped vehicle panel and then cutting, preferably by a narrow laser beam or heated wire, a portion from the same panel to form an opening and a flap with sharp edges and minimal clearance; optionally the visible face is coated before cutting, and movement means are mounted on the non-visible face to move the flap between open and closed positions, with the cutting beam preferably perpendicular to the surface.

Plastic panels and flaps have been generally produced as two separate parts and are very complex to produce in terms of costs, color harmony and gap and flushness management. Indeed, current products require wide gaps or separate parts to realize flaps flushing the openings of plastic panels in proportions that meet the specifications of the car manufacturers.

In an attempt to overcome some of these problems, it is known to mold a plastic panel into which the flap is cut out. However, this solution does not solve all the problems mentioned above. Indeed, it remains very complicated to manage the flush and the gap between the edges of the panel opening and those of the flap to meet the specifications of the car manufacturers.

It is therefore an object of the invention to provide a method for producing a plastic motor vehicle body and a plastic motor vehicle body solving these problems, managing the flush between edges of the opening and the flap and reducing the gap as much as possible to meet the specifications of the car manufacturers.

The invention relates to a method for producing a plastic body part for motor vehicles comprising the following steps:

- molding of a plastic panel having a first face and a second face opposed to the first face, the plastic panel comprising a projecting portion of the first face,
- laser cutting of the plastic panel in a non-vertical cutting plane locally with respect to the first face, forming an opening and a flap having a first face and a second face opposed to the first face, the flap being composed by the projecting portion, the first face of flap being flush with the first face of the plastic panel when the flap is positioned in a closed position of said panel opening.

So, the method of the invention makes possible to realize a smooth-looking body part integrating a flap closing the opening of the plastic panel without any additional costs for separate injection tools. Indeed, the method of the invention only requires one single injection molding step and the step of laser cutting of a portion of the plastic panel which integrated the projecting portion allows to cut a flap which is sized to be flush with the first face of the molded plastic panel. As a result, the flush arrangement between the first face of the flap and the first face of the plastic panel when the flap is in the closed position is optimized and meet the specifications of the car manufacturers.

In order to optimize the flushness between the first face of the plastic panel and the first face of the flap, the thickness h2 of the laser cutting is defined by the following formula:

[Math 1]

$$h2 = h1 \times \cos \alpha$$

h1 being the thickness of the projecting portion with respect to the rest of the first face of the plastic panel and $\alpha$ being the angle of the non-vertical cutting plane with respect to the first face. Advantageously, wherein the thickness of the projecting portion with respect to the rest of the first face of the plastic panel is about 0.4 mm.

In order to optimize the flushness between the second face of the plastic panel and the second face of the flap, after laser cutting, the second face of the plastic panel comprises a recess opposed to the projecting portion, the recess having a corresponding shape to the shape of the projecting portion.

Still with the aim of optimizing the flushness between the first face of the plastic panel and the first face of the flap, in the closed position, the angle of the non-vertical cutting plane with respect to the first side of the plastic panel is between 40° and 60°.

In order to guarantee a good final visual appearance of the first face of the plastic panel and the first face of the door, and also to facilitate the decorating stage of these elements or to avoid reworking, the plastic panel is molded with a groove having rounded upper edges on the first face of the plastic panel and deliming a surface of this first face, laser cutting taking place at the bottom of the groove while preserving the rounded profile of said upper edges. By "decorating stage", it is understood any kind of decoration method of such elements known of the skilled person. It can be for example painting, digital printing, tampon printing, hot stamping, in mould labeling, foil application and even texturing by etching or laser. By "delimiting a surface of this first face", it is understood that the rounded upper edges of the groove can define a closed surface, i.e. the groove extend all around the sides of the surface that will be laser cutting , or they can define an open surface, i.e. the groove does not extend all around the sides of said surface which remains linked to the first face of the plastic panel by at least one side.

Indeed having upper rounded upper edges of the groove prevents the formation of an unsightly excess of decorating coating (paint or other finish) along the edges delimiting the opening of the first face of plastic panel and the edges of the first face of the flap, when the first face of the plastic panel alone (if the decorating step takes place before laser cutting) or when both the first face of the plastic panel and the first face of the flap (if the decorating step takes place after laser cutting) receives a decorating coat (paint or other finish). Advantageously, the first face of the plastic panel is decorated before the step of laser cutting.

In addition, there is disclosed a plastic body part for motor vehicles comprising:

- a plastic panel having an opening, a first face and a second face opposed to the first face and
- a flap cut out from the plastic panel and having a first face and a second face opposed to the first face of the flap, the flap being suitable for closing the panel opening when the flap is positioned in a closed position, the first face of flap being flush with the first face of the plastic panel in the closed position.

Following, other optional features of plastic body part taken alone or in combination:

- the plastic body part comprising means for moving the flap relative to the plastic panel between the closed position and an open position in which the opening is not entirely closed by the flap,
- the edges of the first face of the plastic panel delimiting the opening and the edges of the first face of the flap are rounded edges,
- the plastic panel and the flap are covered with the same coating, preferably said coating being a paint.

Brief description of the drawings

The invention will be better understood on reading the following description, which is given only by way of example and is made with reference to the annexed drawings in which:

[Fig. 1] figure 1 is a top view of a molded plastic panel according to a first embodiment of the invention;
[Fig. 2] figure 2 is a cross-sectional view showing the plastic panel in section AA of Figure 1;
[Fig. 3] figure 3 is a cross-sectional view showing laser cutting of the plastic panel;
[Fig. 4] figure 4 is a cross-sectional view showing a plastic body part according to the first embodiment of the invention;
[Fig. 5] figure 5 is a cross-sectional view showing a plastic body part of figure 4 in a closed position of the flap;
[Fig. 6] figure 6 is a cross-sectional view showing a plastic panel according to a according to a variant of the first embodiment of the invention;
[Fig. 7] figure 7 is a cross-sectional view showing laser cutting of the plastic panel of figure 6;
[Fig. 8] figure 8 is a cross-sectional view showing a plastic body part according to the variant of the invention;
[Fig. 9] figure 9 is a cross-sectional view showing a plastic body part of figure 8 in a closed position of the flap;
[Fig. 10] figure 10 is a top view of a plastic body part of the invention with moving means.

Detailed description

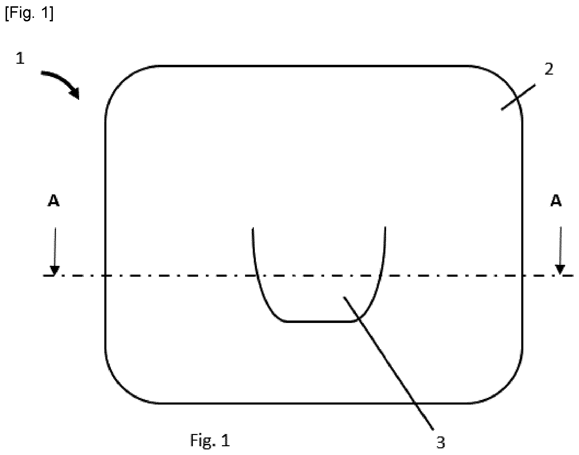

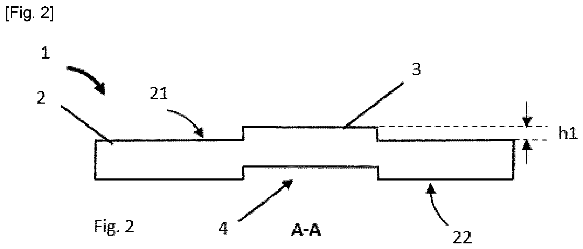

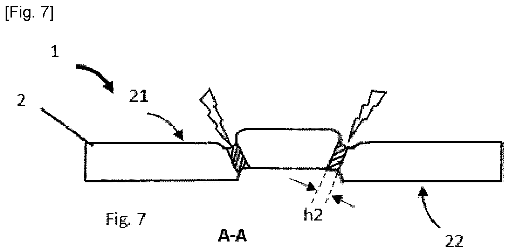

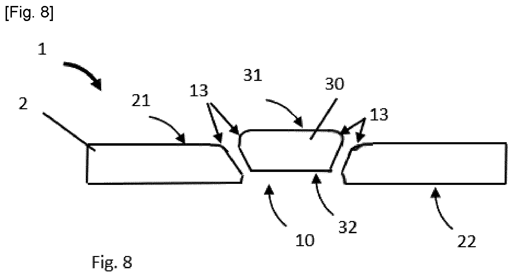

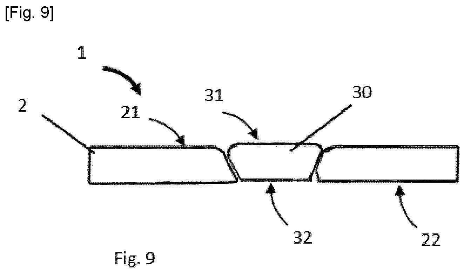

Figures 1 to 10 show a plastic body part according to an embodiment and a variant, designated by the general reference 1. This plastic body part can be made according to a first production method or according to a variant of such a method.

First, a plastic panel 2 is molded, such a plastic panel 2 having a first face 21 and a second face 22 opposed to the first face 21. The plastic panel 2 is molded with a projecting portion 3 of the first face. The projecting portion 3 is sized during the molding step. By sizing the thickness h1 of the projecting portion 3 and knowing the angle $\alpha$ of the non-vertical cutting plane with respect to the first face 21, it is possible to define the thickness h2 of the laser cutting to be made for the next step, thanks to the following formula:

[Math 1]

$$h2 = h1 \times \cos \alpha$$

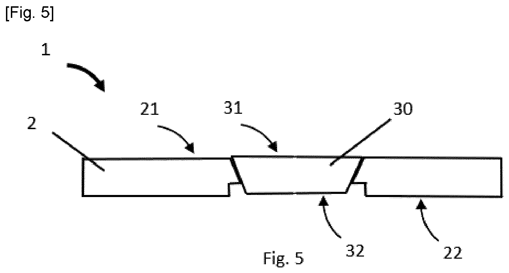

Advantageously, the plastic panel 2 is molded with a recess 4 in the second face 22 opposed to the projecting portion. Preferably, the recess 4 having a corresponding shape to the shape of the projecting portion 3. Such a recess 4 ensures that the flap will not protrude below the second face of the plastic panel when the flap is in the closed position (fig. 5), which may be preferable in some cases, with regard to the aerodynamic performance of the body part and with regard to final visual appearance requirements of the end-users. To have recess 4 having a corresponding shape to the shape of the projecting portion 3 allows to mold a part which has a constant thickness which improves the injection molding quality of the part.

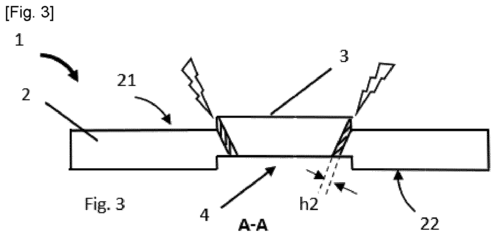

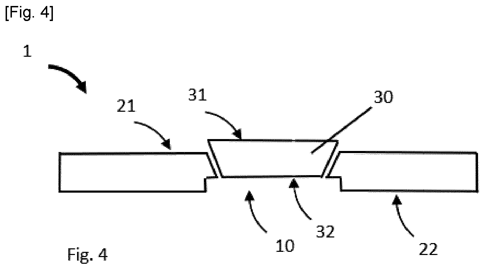

Then, the laser cutting step of the plastic panel 2 is carried out in a non-vertical cutting plane locally with respect to the first face 21, forming an opening 10 and a flap 30 composed by the projecting portion 3 (see fig. 3 and 4). Cutting the first face 21 the plastic panel 2 according to a locally non-vertical cutting plane ensures optimum flushness between the first side 31 of the flap 30 and the first side 21 of the plastic panel 2 when the flap 30 is in the closed position. Such a flush quality is otherwise not possible with a vertical cutting plane. A very good flush quality was observed for a cutting plane forming an angle between 40° and 60° with respect to the first side 21 of the plastic panel 2. A very good flush quality has also been observed when the thickness h1 of the projecting portion is about 0.4 mm, since this particularly small value corresponds to one of the smallest thicknesses achievable by known laser cutting device.

So, it is easily possible to make the first face 31 of cut flap 30 completely flush with the first face 21 of the plastic panel 2, when the flap 30 is positioned in a closed position of the panel opening 10 (fig.5), without any additional costs for separate injection or cutting tools.

Alternatively, it may be necessary to have thicknesses greater than 0.4mm in some cases (e.g. when the flap contour is been illuminated from the back for design reasons). In such cases, the thickness can be around at least 1.5 mm. To achieve such a thickness it can be use two or more laser cuttings devices in parallel or a single laser cutting device that is repeated, each time parallel to the previous laser cutting.

In its final version (fig. 4-5 and 8-10), the plastic body part 1 comprises:

- a plastic panel 2 having an opening 10, a first face and a second face opposed to the first face and
- a flap 30 cut out from the plastic panel 2 (more precisely, the flap 30 being formed by the projecting portion 3 of the first face 21 of the plastic panel 2) and having a first face 31 and a second face 32 opposed to the first face 31 of the flap 30, the flap 30 being suitable for closing the panel opening 10 when it is positioned in a closed position. By doing so, the first face 31 of flap can be as flush as possible with the first face 21 of the plastic panel 2 in the closed position, i.e. both first faces, respectively of the flap 31 and of the plastic panel 21, are in the same plane in the area of the cut (the faces could be slightly curved away from the area of the cut).

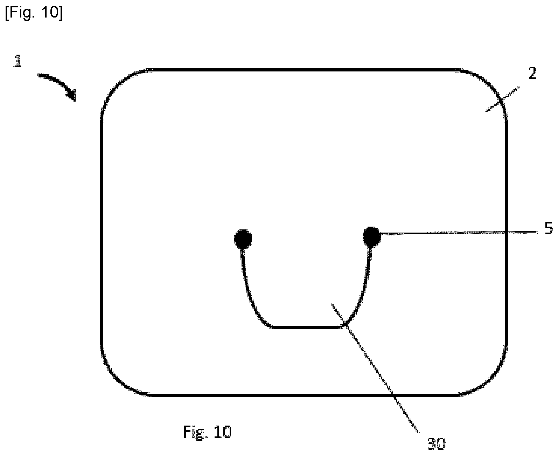

The body part 1 includes means 5 (fig.10) for moving the flap 30 relative to the panel 2, the flap 30 being moved from the closed position to an open position where the opening 10 is not completely closed by the flap 30, and vice versa. Such means 5 are known for the skilled person. It can be for example one or more hinges.

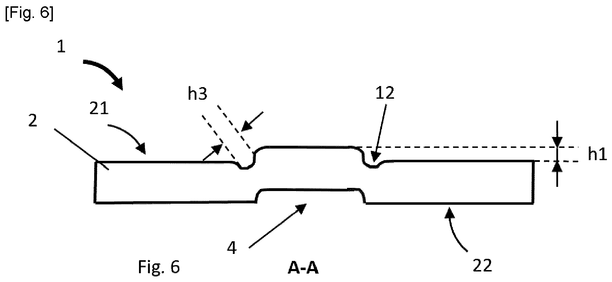

According to a variant of the method of the invention (fig. 6 to 9), the plastic panel is molded with a groove 12 having rounded upper edges 13 on the first face 21 of the plastic panel 2, such a groove 12 delimiting an open surface of the first face 21 which is intended to be the flap 30 after the laser cutting step. Therefore, in this variant, the surface intended to be the flap 30 after the laser cutting step remains linked to the first face 21 of the plastic panel 2 by one of its sides.

In this variant, laser cutting takes place at the bottom of the groove 12 in order form the flap 30 and the opening 10 while preserving the rounded profile of said upper edges 13. In other words, edges 13 of the flap 30 and edges 13 of the plastic panel 2 delimiting the opening 10 are rounded edges, which is very advantageous for aesthetic reasons, particularly as these edges are easier to cover (with paint, for example). It is therefore possible to dispense with all the subsequent steps of reworking that are generally necessary, either to repaint a portion damaged during cutting or to remove excess paint from these edges. To preserve the rounded profile of said upper edges 13, the groove has a circular shape, or a substantially circular shape, which has a diameter h3 equal to or greater than the thickness h2 of the laser cutting.

In such a variant, it is possible to decorate the plastic panel 2 before laser cutting while maintaining an excellent harmony of decorating coat for the final part 1, particularly on the edges 13 resulting from the laser cutting. This saves time and space on the production line since the plastic panel 2 and the flap 30 can be decorated simultaneously without the need for subsequent operations. Even if the flap 30 and the plastic panel 2 are decorated after laser cutting, which may be the case if, for example, they are to be covered with two different coatings, this still saves time and space on the production line since subsequent rework can be avoided.

The invention is not limited to the embodiments shown and other embodiments will be apparent to the skilled person.

## Listing of references

1: plastic body part
2: plastic panel
3: projecting portion
4: recess
5: means for moving the flap relative to the plastic panel
6: /
7: /
8: /
9: /
10: opening
11: /
12: groove
13: rounded upper edges
14: /
15: /
16: /
17: /
18: /
19: /
20: /
21: first face of the plastic panel
22: second face of the plastic panel
23: /
24: /
25: /

26: /
27: /
28: /
29: /
30: flap
31: first face of the flap
32: second face of the flap
h1: thickness of the projecting portion
h2: thickness of the laser cutting
h3: thickness of the groove

## Claims

1. Method for producing a plastic body part (1) for motor vehicles comprising the following steps:

   - molding of a plastic panel (2) having a first face (21) and a second face (22) opposed to the first face (21), the plastic panel (2) comprising a projecting portion (3) of the first face (21),
   - laser cutting of the plastic panel (2) in a non-vertical cutting plane locally with respect to the first face (21), forming an opening (10) and a flap (30) having a first face (31) and a second face (32) opposed to the first face (31), the flap (30) being composed by the projecting portion (3), the first face (31) of flap (30) being flush with the first face (21) of the plastic panel (21) when the flap (30) is positioned in a closed position of said panel opening (10),

   wherein the thickness (h2) of the laser cutting is defined by the following formula:

   [Math 1]

   $$h2 = h1 \times \cos \propto$$

   h1 being the thickness (h1) of the projecting portion (30) with respect to the rest of the first face (21) of the plastic panel (2) and $\alpha$ being the angle of the non-vertical cutting plane with respect to the first face (21).

2. Method according to the preceding claim, wherein the thickness (h1) of the projecting portion (30) with respect to the rest of the first face (21) of the plastic panel (2) is about 0.4 mm.

3. Method according to any one of the preceding claims, wherein the second face (22) of the plastic panel (2) comprises a recess (4) opposed to the projecting portion (3), the recess (4) having a corresponding shape to the shape of the projecting portion (3).

4. Method according to any one of the preceding claims, wherein the angle of the non-vertical cutting plane with respect to the first side (21) of the plastic panel (2) is between 40° and 60°.

5. Method according to any one of the preceding claims, wherein the plastic panel (2) is molded with a groove (12) having rounded upper edges (13) on the first face (21) of the plastic panel (2) and deliming a surface of this first face (21), laser cutting taking place at the bottom of the groove (4) while preserving the rounded profile of said upper edges (13).

6. Method according to any one of the preceding claims, wherein the first face (21) of the plastic panel (2) is decorated before the step of laser cutting.

## Patentansprüche

1. Verfahren zum Herstellen eines Kunststoff-Karosserieteils (1) für Kraftfahrzeuge, umfassend die folgenden Schritte:

   - Formen einer Kunststoffplatte (2) mit einer ersten Fläche (21) und einer zweiten Fläche (22), die der ersten Fläche (21) gegenüberliegt, wobei die Kunststoffplatte (2) einen vorstehenden Abschnitt (3) der ersten Fläche (21) umfasst,
   - Laserschneiden der Kunststoffplatte (2) in einer nicht vertikalen Schnittebene lokal in Bezug auf die erste Fläche (21), wobei eine Öffnung (10) und eine Klappe (30) mit einer ersten Fläche (31) und einer zweiten Fläche (32), die der ersten Fläche (31) gegenüberliegt, gebildet werden, wobei die Klappe (30) aus dem vorstehenden Abschnitt (3) besteht, wobei die erste Fläche (31) der Klappe (30) bündig mit der ersten Fläche (21) der Kunststoffplatte (21) ist, wenn die Klappe (30) in einer geschlossenen Position der Plattenöffnung (10) positioniert ist, wobei die Dicke (h2) des Laserschneidens durch die folgende Formel definiert ist:

   [Math 1]

   $$h2 = h1 \times \cos \alpha$$

   wobei h1 die Dicke (h1) des vorstehenden Abschnitts (30) in Bezug auf den Rest der ersten Fläche (21) der Kunststoffplatte (2) ist und $\alpha$ der Winkel der nicht vertikalen Schnittebene in Bezug auf die erste Fläche (21) ist.

2. Verfahren nach dem vorhergehenden Anspruch, wobei die Dicke (h1) des vorstehenden Abschnitts (30) in Bezug auf den Rest der ersten Fläche (21) der Kunststoffplatte (2) etwa 0,4 mm beträgt.

3. Verfahren nach einem der vorhergehenden Ansprüche, wobei die zweite Fläche (22) der Kunststoffplatte (2) eine Aussparung (4) umfasst, die dem vorstehenden Abschnitt (3) gegenüberliegt, wobei die Aussparung (4) eine Form aufweist, die der Form des vorstehenden Abschnitts (3) entspricht.

4. Verfahren nach einem der vorhergehenden Ansprüche, wobei der Winkel der nicht vertikalen Schnittebene in Bezug auf die erste Fläche (21) der Kunststoffplatte (2) zwischen 40° und 60° beträgt.

5. Verfahren nach einem der vorhergehenden Ansprüche, wobei die Kunststoffplatte (2) mit einer Nut (12) geformt wird, die auf der ersten Fläche (21) der Kunststoffplatte (2) abgerundete Oberkanten (13) aufweist und eine Oberfläche dieser ersten Fläche (21) begrenzt, wobei das Laserschneiden an dem Boden der Nut (4) erfolgt, während das abgerundete Profil der Oberkanten (13) erhalten bleibt.

6. Verfahren nach einem der vorhergehenden Ansprüche, wobei die erste Fläche (21) der Kunststoffplatte (2) vor dem Schritt des Laserschneidens verziert wird.

**Revendications**

1. Procédé de fabrication d'une pièce de carrosserie en plastique (1) pour véhicules automobiles, comprenant les étapes suivantes :

    - moulage d'un panneau en plastique (2) présentant une première face (21) et une deuxième face (22) opposée à la première face (21), le panneau en plastique (2) comprenant une partie en saillie (3) de la première face (21),
    - découpe au laser du panneau en plastique (2) dans un plan de découpe non vertical localement par rapport à la première face (21), formant une ouverture (10) et un volet (30) présentant une première face (31) et une deuxième face (32) opposée à la première face (31), le volet (30) étant constitué par la partie en saillie (3), la première face (31) du volet (30) étant affleurante avec la première face (21) du panneau en plastique (21) lorsque le volet (30) est positionné dans une position de fermeture de ladite ouverture (10) du panneau,
    dans lequel l'épaisseur (h2) de la découpe au laser est définie par la formule suivante :

    [Math 1]

    $$h2 = h1 \times \cos \propto$$

h1 étant l'épaisseur (h1) de la partie en saillie (30) par rapport au reste de la première face (21) du panneau en plastique (2) et $\alpha$ étant l'angle du plan de découpe non vertical par rapport à la première face (21).

2. Procédé selon la revendication précédente, dans lequel l'épaisseur (h1) de la partie en saillie (30) par rapport au reste de la première face (21) du panneau en plastique (2) est d'environ 0,4 mm.

3. Procédé selon l'une quelconque des revendications précédentes, dans lequel la deuxième face (22) du panneau en plastique (2) comprend un évidement (4) opposé à la partie en saillie (3), l'évidement (4) ayant une forme correspondant à la forme de la partie en saillie (3).

4. Procédé selon l'une quelconque des revendications précédentes, dans lequel l'angle formé par le plan de découpe non vertical par rapport à la première face (21) du panneau en plastique (2) est compris entre 40° et 60°.

5. Procédé selon l'une quelconque des revendications précédentes, dans lequel le panneau en plastique (2) est moulé avec une rainure (12) présentant des bords supérieurs arrondis (13) sur la première face (21) du panneau en plastique (2) et délimitant une surface de cette première face (21), la découpe au laser s'effectuant au fond de la rainure (4) tout en préservant le profil arrondi desdits bords supérieurs (13).

6. Procédé selon l'une quelconque des revendications précédentes, dans lequel la première face (21) du panneau en plastique (2) est décorée avant l'étape de découpe au laser.

[Fig. 1]

Fig. 1

[Fig. 2]

Fig. 2

A-A

[Fig. 3]

Fig. 3

A-A

[Fig. 4]

Fig. 4

[Fig. 5]

1

2    21    31    30

Fig. 5    32    22

[Fig. 6]

Fig. 6    A-A

[Fig. 7]

Fig. 7

A-A

[Fig. 8]

Fig. 8

[Fig. 9]

Fig. 9

[Fig. 10]

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2016075411 A1